(19) Europäisches Patentamt
European Patent Office
Office européen des brevets

(11) **EP 2 554 245 A1**

(12) **EUROPEAN PATENT APPLICATION**
published in accordance with Art. 153(4) EPC

(43) Date of publication:
**06.02.2013 Bulletin 2013/06**

(51) Int Cl.:
**B01D 65/02** (2006.01)    **C02F 1/28** (2006.01)
**C02F 1/44** (2006.01)    **C02F 1/52** (2006.01)

(21) Application number: **11762529.3**

(22) Date of filing: **10.03.2011**

(86) International application number:
**PCT/JP2011/055643**

(87) International publication number:
**WO 2011/122289 (06.10.2011 Gazette 2011/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2010   JP 2010077069**

(71) Applicant: **Toray Industries, Inc.
Tokyo 103-8666 (JP)**

(72) Inventors:
• **ONISHI, Takashi
Iyo-gun
Ehime 791-3193 (JP)**
• **IKEDA, Keiichi
Otsu-shi
Shiga 520-8558 (JP)**
• **OKUBO, Kenichi
Otsu-shi
Shiga 520-8558 (JP)**

(74) Representative: **Prüfer & Partner GbR
European Patent Attorneys
Sohnckestrasse 12
81479 München (DE)**

(54) **METHOD FOR CLEANING SEPARATION MEMBRANE MODULE, AND METHOD FOR FRESH WATER GENERATION**

(57)    The present invention has an object to provide a method for washing a separation membrane module after filtering raw water containing particles having a hardness higher than that of a separation membrane, wherein abrasion of the membrane outer surface by high hardness particles at the time of air scrubbing is efficiently reduced, and a cake layer resistance originating in high hardness particles on the membrane surface is suppressed when the membrane is successively used in a filtration step to allow stable operations at a low transmembrane pressure for a long time period. Thus, after completion of filtration, water at the primary side in a separation membrane module is drained to outside the system, backwash waste water in the separation membrane module is then drained while carrying out backwash, and any of the steps of:

(a) filling the primary side in the separation membrane module with water and carrying out air scrubbing; and

(b) carrying out air scrubbing while feeding water to the primary side in the separation membrane module is then carried out, followed by draining water at the primary side in the separation membrane module to outside the system.

【Fig. 1】

EP 2 554 245 A1

**Description**

Technical Field

The present invention relates to a method for washing a microfiltration membrane (MF membrane) module or an ultrafiltration membrane (UF membrane) module which has been involved in membrane filtration of raw water containing particles having a hardness higher than that of a separation membrane, and a method for generating fresh water using the same.

Background Art

Membrane separation methods have advantages such as saving of energy/space and improvement of filtrate water quality and are therefore increasingly used in various fields. Mention is made of, for example, application of microfiltration membranes and ultrafiltration membranes to a water purification process for producing industrial water and tap water from river water, groundwater and treated sewage, and to a pretreatment in a reverse osmosis membrane treatment step for seawater desalination. Further, in the course of those membrane treatments, activated carbon may be added to raw water and the like for the purpose of removing soluble organic matters (Patent Literature 1).

When membrane filtration of raw water is continued, there arises the problem that the amount of humic substances, microorganism-derived proteins and the like deposited on the membrane surface and in membrane pores increases with the filtrate water volume, leading to a reduction in filtrate flow rate or an increase in transmembrane pressure.

Thus, physical washing processes have been put into practical use such as an air scrubbing process of scraping off deposited substances on the membrane surface by introducing air bubbles into the primary side (feed side), oscillating membranes and causing membranes to contact one another and a backwash process of eliminating contaminants deposited on the membrane surface and in membrane pores by forcing membrane filtrate water or clarified water under a pressure in a direction from the secondary side (permeate side) to the primary side, which is opposite to the direction in the membrane filtration method (Patent Literatures 2, 3 and 4).

For further improving the washing effect, there have been proposed, for example, methods of adding sodium hypochlorite to backwash water and of using ozone water for backwash water (Patent Literatures 5 and 6). An oxidant has an effect of decomposing/removing organic matters such as humic substances and microorganism-derived proteins deposited on the membrane surface and in membrane pores.

In addition, there has been proposed a method in which for backwash, water at the primary side in a separation membrane module is once drained, and backwash is carried out while draining backwash waste water (Patent Literature 7).

Citation List

Patent Literature

Patent Literature 1: Japanese Patent Application Laid-Open (JP-A) No. 10-309567
Patent Literature 2: JP-A No. 11-342320
Patent Literature 3: JP-A No. 2000-140585
Patent Literature 4: JP-A No. 2007-289940
Patent Literature 5: JP-A No. 2001-187324
Patent Literature 6: JP-A No. 2001-79366
Patent Literature 7: JP-A No. 6-170364

Summary of Invention

Technical Problem

However, when filtering raw water containing high hardness particles, particularly particles harder than a separation membrane, such as powdered activated carbon, there has been a problem that high hardness particles detached from the membrane surface by carrying out air scrubbing collide against the membrane surface to abrade the membrane, leading to a degradation in filtration performance. When air scrubbing is not carried out but only backwash is carried out, there has been a problem that high hardness particles cannot be adequately detached from the membrane surface and are accumulated in a large amount, and therefore a cake layer resistance originating in high hardness particles increases, leading to a rapid increase in differential pressure. Even though sodium hypochlorite is added to backwash water or ozone water is used for backwash water, there has been a problem that if powdered activated carbon is contained in high hardness particles, those chemicals are consumed by powdered activated carbon, leading to a degradation in the effect of decomposing/removing organic matters deposited on the membrane.

Thus, an object of the present invention is to provide a method for washing a separation membrane module after filtering raw water containing particles having a hardness higher than that of a separation membrane, wherein abrasion of the membrane outer surface by high hardness particles at the time of air scrubbing is efficiently reduced, and a cake layer resistance originating in high hardness particles on the membrane surface is suppressed when the membrane is successively used in a filtration step to allow stable operations at a low transmembrane pressure for a long time period. In addition, it is an object of the present invention to provide a washing method capable of efficiently decomposing/removing organic matters deposited on a membrane when using an oxidant, and a method for generating fresh water.

Solution to Problem

For solving the problem described above, a method for washing a separation membrane module and a method for generating fresh water in the present invention have the following features.

(1) A method for washing a separation membrane module after filtering raw water containing particles having a hardness higher than that of a separation membrane using the separation membrane, wherein after completion of filtration, water at the primary side in a separation membrane module is drained to outside the system, backwash waste water in the separation membrane module is then drained while carrying out backwash, and any of the steps of:

(a) filling the primary side in the separation membrane module with water and carrying out air scrubbing; and
(b) carrying out air scrubbing while feeding water to the primary side in the separation membrane module is then carried out, followed by draining water at the primary side in the separation membrane module to outside the system.

(2) The method for washing a separation membrane module according to (1), wherein the primary side is filled with backwash water and/or raw water and air scrubbing is carried out in the step (a).
(3) The method for washing a separation membrane module according to (1), wherein air scrubbing is carried out while feeding backwash water and/or raw water to the primary side in the step (b).
(4) The method for washing a separation membrane module according to any of (1) to (3), wherein after completion of filtration, water at the primary side in the separation membrane module is drained to outside the system until the water level at the primary side in the separation membrane module is at least equal to or lower than 1/3 of the length of the separation membrane.
(5) The method for washing a separation membrane module according to any of (1) to (3), wherein after completion of filtration, water at the primary side in the separation membrane module is totally drained to outside the system.
(6) The method for washing a separation membrane module according to any of (1) to (5), wherein the backwash flow rate is controlled so that the water level at the primary side in the separation membrane module is kept at least equal to or lower than 1/3 of the length of the separation membrane when backwash waste water in the separation membrane module is drained while carrying out backwash.
(7) The method for washing a separation membrane module according to any of (1) to (6), wherein water is fed to the primary side in the separation membrane module from the upper part of the separation membrane module concurrently with backwash and/or after backwash.
(8) The method for washing a separation membrane module according to any of (1) to (7), wherein an oxidant is added to water used in the step (a) or (b).
(9) A method for generating fresh water in which raw water containing high hardness particles is filtered by a separation membrane module provided with a separation membrane to obtain filtrate water, wherein a filtration step is once terminated based on at least any of values of a filtration time [min], a filtrate water volume [m$^3$], a filtrate flow rate [m$^3$/hr] and a transmembrane pressure [kPa], and the separation membrane module is washed by the method according to any of (1) to (8), followed by resuming the filtration step.
(10) The method for generating fresh water according to (9), wherein a coagulant is added to raw water containing particles having a hardness higher than that of the separation membrane.
(11) The method for generating fresh water according to (9) or (10), wherein the particles having a hardness higher than that of the separation membrane are powdered activated carbon.

Advantageous Effects of Invention

In a method for washing a separation membrane module in the present invention, water at the primary side is once drained to outside the system (preferably water at the primary side is drained to outside the system so that the water level at the primary side in the separation membrane module is below the lower end of the separation membrane), and backwash is carried out with a gaseous ambient created at the primary side. Thus, in the backwash process, high hardness particles are easily detached from the membrane surface as compared to a liquid ambient at the primary side where a hydraulic pressure is exerted on the primary side, and the high hardness particles are easily discharged directly to outside the system. Air scrubbing is subsequently carried out for a reduced time period as compared to conventional air scrubbing to thereby completely discharge remaining high hardness particles which have not been detached from the membrane surface. Thus, membrane abrasion originating in high hardness particles by air scrubbing can be significantly reduced. When the membrane is successively used in a filtration step, a cake layer resistance originating in high hardness particles on the membrane surface is suppressed to allow stable operations at a low transmembrane pressure for a long time period. When an oxidant is added to water used in the step (a) or (b), organic matters deposited on the membrane can be efficiently decomposed/removed.

Brief Description of Drawing

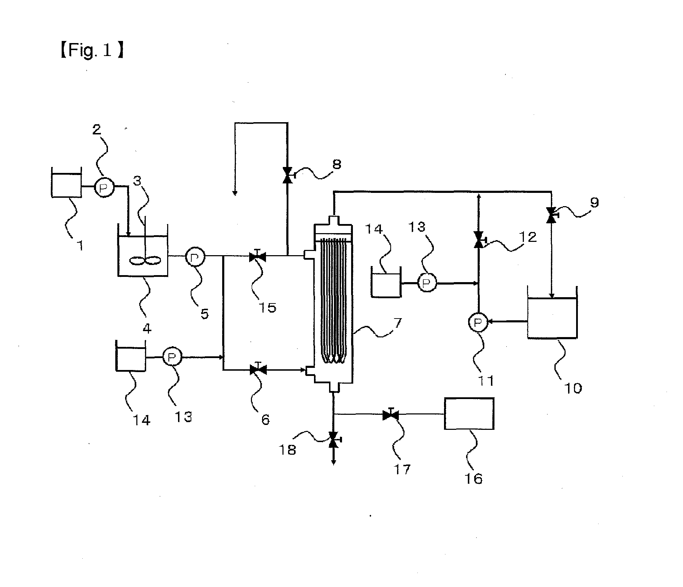

Figure 1 is a plant layout schematic flow diagram showing one example of a fresh water generator to which the present invention is applied.

Description of Embodiments

The present invention will be described further in detail below on the basis of an embodiment shown in the drawing. The present invention is not limited to the embodiment below.

As shown in Figure 1, for example, a fresh water generator with which the method of the present invention is carried out is provided with an activated carbon slurry tank 1 which stores a powdered activated carbon slurry, a slurry pump 2 which feeds powdered activated carbon to raw water, a stirring machine 3 which mixes raw water and powdered activated carbon with stirring, a raw water tank 4 which stores raw water, a raw water pump 5 which feeds raw water, a raw water valve 6 which is opened when feeding raw water, an MF/UF membrane module 7 which filtrates raw water, an air vent valve 8 which is opened when carrying out backwash, air scrubbing and the like, a filtrate valve 9 which is opened at the time of membrane filtration, a filtrate tank 10 which stores membrane filtrate water obtained by the MF/UF membrane module, a backwash pump 11 which feeds membrane filtrate water to the MF/UF membrane module 7 to carry out backwash, a backwash valve 12 which is opened at the time of carrying out backwash, an oxidant pump 13 which feeds an oxidant to water with which the primary side is filled at the time of air scrubbing (i.e. raw water or membrane filtrate water used as backwash water), an oxidant tank 14 which stores an oxidant, a raw water bypass valve 15 which is opened when raw water is fed from the upper part of the MF/UF membrane module 7, an air blower 16 which is an air source for air scrubbing of the MF/UF membrane module 7, an air washing valve 17 which is opened when feeding air to the lower part of the MF/UF membrane module to carry out air scrubbing, and a drain valve 18 which is opened when draining water at the primary side of the MF/UF membrane module 7.

In the membrane filtration fresh water generator described above, the powdered activated carbon slurry stored in the activated carbon slurry tank 1 is fed to the raw water tank 4 by the slurry pump 2 in the filtration step. Raw water mixed with powdered activated carbon with stirring by the stirring machine 3 is fed to the primary side in the MF/UF membrane module 7 by operating the raw water pump 5 and opening the raw water valve 6. Further the filtrate valve 9 is opened to carry out pressure filtration of the MF/UF membrane module 7. Filtrate water is transferred from the secondary side via the filtrate valve 9 to the filtrate tank 10. In the case of dead-end filtration, the air vent valve 8, the backwash valve 2, the raw water bypass valve 15, the air washing valve 17 and the drain valve 18 are all closed. The filtration time is preferably determined as appropriate depending on the raw water quality, filtration flux and the like, but the filtration time may be continued until reaching a predetermined transmembrane pressure and filtrate water volume [m$^3$] for constant flow filtration and a predetermined filtrate flow rate [m$^3$/hr] and filtrate water volume [m$^3$] for constant pressure filtration. The filtrate flow rate means a filtrate water volume per unit time.

In the fresh water generator described above, a washing method of the present invention is carried out, for example, in the following manner.

First, the raw water valve 6 and the filtrate valve 9 are closed, and the raw water pump 5 is stopped to stop a filtration step of the MF/UF membrane module 7. Thereafter, the MF/UF membrane module 7 is washed for discharging powdered activated carbon deposited on a hollow fiber membrane to outside the system. At this time, the air vent valve 8 and the drain valve 18 of the MF/UF membrane module 7 are first opened. When water at the primary side in the MF/UF membrane module 7 is drained from the drain valve 18 in the lower part of the MF/UF membrane module 7 to outside the membrane module system, the water level in the MF/UF membrane module 7 decreases to create a gaseous ambient at the primary side. Here, the primary side means a side at which raw water to be filtered is fed, and the secondary side means a side at which filtrate water obtained by filtering raw water by the membrane is present. Water at the primary side in the MF/UF membrane module may remain, but at least a half of the membrane is above the water surface and contacts a gas. Water is drained so that preferably the water level is equal to or less than 1/3 of the length of the separation membrane in the vertical direction, and more preferably the entire membrane is above the water surface and contacts a gas.

Thereafter, the backwash valve 12 is opened with the air vent valve 8 and the drain valve 18 kept open, and the backwash pump 11 is operated to carry out backwash using filtrate water in the filtrate tank 10. At this time, backwash waste water in the separation membrane module is drained. Conventional backwash has been carried out with the primary side in the MF/UF membrane module 7 filled with water, wherein backwash waste water was drained through the air vent valve 8 to outside the system, and therefore a hydraulic pressure inhibited detachment of powdered activated carbon from the membrane surface. In contrast, in the present invention, a resistance by a hydraulic pressure is absent at the time of backwash, powdered activated carbon is therefore easily detached from the membrane surface, and detached powdered activated carbon is discharged from the lower part of the MF/UF membrane module 7 via the drain valve 18 directly to outside the system while dropping from the membrane surface.

When backwash is carried out while draining backwash waste water in the separation membrane module, the effect of detaching high hardness particles from the membrane surface is improved as the hydraulic pressure exerted continuously on the primary side during backwash decreases, and therefore the backwash flow rate [$m^3$/hr] is preferably controlled so that the water level at the primary side in the separation membrane module is kept at least equal to or less than 1/3 of the length of the separation membrane. The effect of detaching high hardness particles from the membrane surface is improved as the backwash flow rate is increased, but the flow rate of waste water drained under its own weight from the lower part of the MF/UF membrane module 7 is limited by the size of a drain port of the MF/UF membrane module 7, and the water level at the primary side may increase to exert a hydraulic pressure on the primary side. Thus, the backwash flow rate is preferably controlled as appropriate according to the structure of the MF/UF membrane module 7.

It is preferable to open the raw water bypass valve 15 to operate the raw water pump 5 concurrently with backwash and/or after backwash and feed water from the upper part of the MF/UF membrane modul'e 7 to the primary side because powdered activated carbon is more easily detached from the membrane surface. However, the volume of water fed to the primary side should be set lower than the volume of water drained from the drain valve 18 to outside the system so that the primary side in the MF/UF membrane module 7 is not completely filled with water.

Thereafter, the air vent valve 8 is opened, the raw water bypass valve 15 and the drain valve 18 are closed to fill water at the primary side in the MF/UF membrane module 7, the air washing valve 17 is opened, and the air blower 16 is operated to feed a gas from below the MF/UF membrane module 7 to carry out air scrubbing.

As a method for filling water at the primary side in the MF/UF membrane module 7, raw water may be fed by opening the raw water valve 6 and operating the raw water pump 5 or membrane filtrate water may be fed as backwash water by opening the backwash valve 12 and operating the backwash pump 11. An oxidant is preferably added to raw water or membrane filtrate water fed at this time (i.e. water with which the primary side in the MF/UF membrane module 7 is filled at the time of air scrubbing) by operating the oxidant pump 13 as the oxidant has an effect of decomposing and removing organic matters accumulated on the membrane surface and in membrane pores. In conventional physical washing processes, powdered activated carbon in the MF/UF membrane module 7 is not sufficiently detached from the membrane surface, and therefore an oxidant added to raw water and membrane filtrate water is mostly consumed by powdered activated carbon before decomposing and removing organic matters accumulated on the membrane surface and in membrane pores, whereas utilization of an oxidant can be maximized in the present invention.

Air scrubbing may be started with the primary side in the separation membrane module pre-filled with water or may be carried out while feeding water to the primary side in the separation membrane module (i.e. feeding raw water into the MF/UF membrane module 7 during air scrubbing and carrying out backwash). However, it is more preferable to carry out air scrubbing while feeding water because the washing effect is improved.

Thereafter, the air washing valve 17 is closed and the air blower 16 is stopped to complete air scrubbing. When raw water is fed into the MF/UF membrane module 7 during air scrubbing and backwash is continued, the raw water valve 6 and the backwash valve 12 are closed and the backwash pump 11 and the oxidant pump 13 are stopped to complete feeding of raw water or backwash as well.

The drain valve 18 is then opened to discharge to outside the system fouling substances detached from the membrane surface and the insides of membrane pores and suspended in the MF/UF membrane module 7.

After completion of draining, the drain valve 18 is closed, the raw water valve 6 is opened, the raw water pump 5 is operated to feed water, and the primary side of the MF/UF membrane module 7 is full-filled with water. Thereafter, the air vent valve 8 is closed and the filtrate valve 9 is opened, so that the separation membrane module returns to the filtration step, and generation of fresh water can be thus continued by repeating the steps described above.

The washing method of the present invention may be carried out every time after completion of the filtration step, or may be sometimes carried out in combination with another washing method. Water at the primary side drained by the drain valve 18 in the lower part of the MF/UF membrane module 7 is preferably used again as raw water fed to the MF/UF membrane module 7 before backwash is carried out. Water drained here has not been involved in backwash and air scrubbing in advance, and therefore has a low level of contamination, and may be used again as raw water for membrane filtration without any trouble. The recovery rate (filtrate water volume/raw water volume) can be thereby improved to significantly reduce wasted waste water. Further, some of activated carbon deposited on the membrane surface can be removed by draining water from the drain valve 18. Activated carbon removed at this time is activated carbon added just before completion of filtration, and therefore still has an absorption capacity. If reuse can be made, economic efficiency can be improved. For reuse as raw water, drained water may be sent back into the raw water tank 4, or sent back to the front stage of pretreatment, if it is pretreated, and used again as raw water for membrane filtration.

In the present invention, the high hardness particle means a particles harder than a separation membrane used in filtration and washing. Such high hardness particles include powdered activated carbon and metallic powders, particles of silt, sands and ceramic particles, but powdered activated carbon is preferably employed from the viewpoint of an absorption capacity. Here, for assessment of whether high hardness particles are harder than a separation membrane, measurements are made by a measurement method conforming to ISO 14577-1 (instrumented indentation hardness) and measured hardnesses are compared to make an assessment. However, concerning a hollow separation membrane, the membrane is cut open into a flat membrane and measured.

The raw material of powdered activated carbon may be any of carbon from wood such as coconut shell flour and sawdust and carbon from coal such as peat, lignite and bituminous coal. The particle diameter of powdered activated carbon is preferably as small as possible because the specific surface area and the absorption capacity increase as the particle diameter decreases. However, the powdered activated carbon has a particle diameter larger than the pore diameter of the separation membrane of the MF/UF membrane module 7 so as not to be mixed in membrane filtrate water.

An organic or inorganic coagulant can also be added to raw water fed to the primary side of the MF/UF membrane module 7 in the filtration step. Addition of a coagulant has an effect of suppressing membrane fouling and reducing the concentration of organic matters during membrane filtration. As the organic coagulant, dimethylamine and polyacrylamide cationic high-polymer coagulants and the like may be used. On the other hand, as the inorganic coagulant, polyaluminium chloride, polyaluminium sulfate, ferric chloride, polyferric sulfate, ferric sulfate, polysilicato-iron and the like may be used.

The MF/UF membrane module 7 may be of outside-to-inside flow or inside-to-outside flow, but the outside-to-inside flow is preferable from the viewpoint of easiness of pretreatment. For the membrane filtration type, the membrane module may be a dead-end filtration type module or a cross-flow filtration type module, but the dead-end filtration type module is preferable from the viewpoint of low energy consumptions. Further, the membrane module may be a pressurized type membrane module or a submerged type membrane module, but the pressurized type membrane module is preferable in the sense that high flux is possible.

The separation membrane used in the MF/UF membrane module 7 is not particularly limited as long as it is porous, but an MF membrane (microfiltration membrane) is used, or a UF membrane (ultrafiltration membrane) is used, or both membranes are used in combination depending on a desired quality and flow rate of treated water. For example, when it is desired to remove suspended solid matters, coriforms, cryptosporidia and the like, any of the MF membrane and UF membrane may be used, but when it is desired to remove viruses, high molecular organic matters and the like as well, the UF membrane is preferably used.

The form of the separation membrane may be any of a hollow fiber membrane, a flat membrane, a tubular membrane and the like.

The material of the separation membrane preferably includes at least any one selected from the group consisting of polyethylene, polypropylene, polyacrylonitrile, an ethylene-tetrafluoroethylene copolymer, polychlorotrifluoroethylene, polytetrafluoroethylene, polyvinyl fluoride, a tetrafluoroethylene-hexafluoropropylene copolymer, a tetrafluoroethylene-perfluoroalkylvinylether copolymer and a chlorotrifluoroethylene-ethylene copolymer, polyvinylidene fluoride, polysulfone, cellulose acetate, polyvinyl alcohol and polyether sulfone, polyvinylidene fluoride (PVDF) is still more preferable from the viewpoint of membrane strength and chemical resistance, and polyacrylonitrile is more preferable from the viewpoint of high hydrophilicity and an improved anti-fouling property. The separation membrane made of the above-mentioned organic polymer resin has a hardness lower than that of high hardness particles according to the present invention such as powdered activated carbon, and therefore may be favorably used in the method for washing a separation membrane module in the present invention.

The method for controlling a filtration operation may be constant flow filtration or constant pressure filtration, but constant flow filtration is preferable in the sense that a constant treated water volume can be obtained and overall control is easy.

According to the present invention as described above, membrane surface abrasion by high hardness particles (powdered activated carbon, etc.) at the time of air scrubbing can be efficiently reduced, and organic matters deposited on the membrane surface and in membrane pores can be effectively decomposed/removed. Consequently, the transmembrane pressure is stable for a long time period as compared to conventional techniques. However, it is difficult to completely decompose/remove organic matters, and aluminum and iron originating in a coagulant may be deposited or iron, manganese and the like oxidized by an oxidant may be gradually precipitated on the membrane surface. Therefore, high-concentration chemical washing is preferably carried out if the transmembrane pressure reaches near the withstand pressure limit of the MF/UF membrane module 7.

A chemical for use in the washing may be selected after a concentration and a retention time that do not deteriorate the membrane are determined as appropriate, it is preferable that at least one of sodium hypochlorite, chlorine dioxide, hydrogen peroxide, ozone and the like be contained because the washing effect against organic matters is improved. It is preferable that at least one of hydrochloric acid, sulfuric acid, nitric acid, citric acid, oxalic acid and the like be contained because the washing effect against aluminum, iron, manganese and the like is improved.

Examples

<Method for Evaluation of Transmembrane Pressure>

Pressure gauges were mounted on a raw water pipe (at the primary side) to be connected to the MF/UF membrane module 7 and a membrane filtrate pipe (at the secondary side), and a pressure at the secondary side was subtracted from a pressure at the primary side to calculate a transmembrane pressure.

<Recovery Factor by Chemical Washing>

The pure water permeability (m$^3$/h at 50 kPa, 25°C) of the MF/UF membrane module 7 before the start of operation (as a brand-new article) and after chemical washing is measured. A recovery factor (%) was calculated in accordance by the formula: 100 x B/A where the pure water permeability as a brand-new article is designated as A and the pure water permeability after chemical washing is designated as B.

The pure water permeability was calculated by the following formula after measuring a transmembrane pressure C (kPa) when carrying out membrane filtration of pure water having a temperature of 25°C at a filtrate flow rate of 6 m$^3$/h.

$$\text{Pure water permeability (m}^3\text{/h, at 50 kPa, 25°C)} = 6 \times 50/C$$

<Accumulation of Dry Sludge in Separation Membrane Module>

After disassembly of the MF/UF membrane module 7, the membrane was placed in a water tank containing pure water, and continuously exposed to air until no change was observed in the concentration of suspended matters in the water tank, and sludge on the membrane outer surface was washed off with pure water. Sludge washed off from the membrane outer surface was dried at 100°C to volatilize water completely, followed by measuring the weight.

<Method for Evaluation of Surface State of Separation Membrane>

After disassembly of the MF/UF membrane module 7, the membrane was placed in a water tank containing pure water, and continuously exposed to air until no change was observed in the concentration of suspended matters in the water tank, and sludge on the membrane outer surface was washed off with pure water. The membrane was dried at 30°C, followed by observing the membrane outer surface at a magnification of 10000x using an electron microscope.

(Example 1)

In an apparatus using one PVDF hollow fiber UF membrane outside-to-inside pressured type module HFU-2020 (manufactured by Toray Industries, Inc) as shown in Figure 1, the raw water valve 6 and the filtrate valve 9 were opened, the slurry pump 2 and the raw water pump 5 were operated, and river water adjusted to have a powdered activated carbon concentration of 50 mg/l in the raw water tank 4 was subjected to constant flow filtration at a membrane filtration flux of 1.5 m$^3$/(m$^2$·d). The raw water valve 6 and the filtrate valve 9 were closed 30 minutes after the start of constant flow filtration, the slurry pump 2 and the raw water pump 5 were stopped, the air vent valve 8 and the drain valve 18 were then opened, and water at the primary side in the MF/UF membrane module 7 was totally drained. Thereafter, with the air vent valve 8 and the drain valve 18 kept open, the backwash valve 12 was opened and the backwash pump 11 was operated to carry out backwash at a flux of 2 m$^3$/(m$^2$·d) for 30 seconds. Thereafter, the backwash valve 12 and the drain valve 18 were closed, the backwash pump 11 was stopped and the raw water valve 6 was opened at the same time, and the raw water pump 5 and the oxidant pump 13 were operated to fill the primary side in the MF/UF membrane module 7 with raw water containing no powdered activated carbon and having a chlorine concentration of 10 mg/l. After filling the primary side in the MF/UF membrane module 7 with raw water, the raw water valve 6 was closed, the raw water pump 5 and the oxidant pump 13 were stopped and the air washing valve 17 was opened at the same time, and the air blower 16 was operated to carry out air scrubbing at an air flow rate of 100 L/min for 15 seconds. Thereafter, the air washing valve 17 was closed, the air blower 16 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 was 83 kPa after a year with respect to 15 kPa just after the start of operation, so that stable operations were performed. As a result of carrying out chemical washing with hypochlorous acid and citric acid after an operating period of one year, the pure water permeability of the MF/UF membrane module 7 was recovered to a ratio of 85% to the new-brand article. The MF/UF membrane module 7 was disassembled to find that only 2 kg of dry sludge were accumulated in the membrane module, and the membrane outer surface was observed by an electron microscope to find that 90 percents of the membrane outer surface were flat and there was little abraded state.

(Example 2)

In an apparatus using one PVDF hollow fiber UF membrane outside-to-inside pressured type module HFU-2020 (manufactured by Toray Industries, Inc) as shown in Figure 1, the raw water valve 6 and the filtrate valve 9 were opened, the slurry pump 2 and the raw water pump 5 were operated, and river water adjusted to have a powdered activated carbon concentration of 50 mg/l in the raw water tank 4 was subjected to constant flow filtration at a membrane filtration flux of 1.5 m$^3$/(m$^2$·d). The raw water valve 6 and the filtrate valve 9 were closed 30 minutes after the start of constant flow filtration, the slurry pump 2 and the raw water pump 5 were stopped, the air vent valve 8 and the drain valve 18 were then opened, and water at the primary side in the MF/UF membrane module 7 was totally drained. Thereafter, with the air vent valve 8 and the drain valve 18 kept open, the backwash valve 12 was opened and the backwash pump 11 was operated to carry out backwash at a flux of 2 m$^3$/(m$^2$·d) for 30 seconds. Thereafter, the backwash valve 12 and the drain valve 18 were closed, the backwash pump 11 was stopped and the raw water valve 6 and the air washing valve 17 were opened at the same time, and the raw water pump 5, the oxidant pump 13 and the air blower 16 were operated to feed to the primary side in the MF/UF membrane module 7 raw water containing no powdered activated carbon and having a chlorine concentration of 10 mg/l and carry out air scrubbing at an air flow rate of 100 L/min at the same time for 15 seconds. Thereafter, the raw water valve 6 and the air washing valve 17 were closed, the raw water pump 5, the oxidant pump 13 and the air blower 16 were stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 was 79 kPa after a year with respect to 15 kPa just after the start of operation, so that stable operations were performed. As a result of carrying out chemical washing with hypochlorous acid and citric acid after an operating period of one year, the pure water permeability of the MF/UF membrane module 7 was recovered to a ratio of 87% to the new-brand article. The MF/UF membrane module 7 was disassembled to find that only 1.5 kg of dry sludge were accumulated in the membrane module, and the membrane outer surface was observed by an electron microscope to find that 90 percents of the membrane outer surface were flat and there was little abraded state.

(Example 3)

In an apparatus using one PVDF hollow fiber UF membrane outside-to-inside pressured type module HFU-2020 (manufactured by Toray Industries, Inc) as shown in Figure 1, the raw water valve 6 and the filtrate valve 9 were opened, the slurry pump 2 and the raw water pump 5 were operated, and river water adjusted to have a powdered activated carbon concentration of 50 mg/l in the raw water tank 4 was subjected to constant flow filtration at a membrane filtration flux of 1.5 m$^3$/(m$^2$·d). The raw water valve 6 and the filtrate valve 9 were closed 30 minutes after the start of constant flow filtration, the slurry pump 2 and the raw water pump 5 were stopped, the air vent valve 8 and the drain valve 18 were then opened, and water at the primary side in the MF/UF membrane module 7 was totally drained. Thereafter, with the air vent valve 8 and the drain valve 18 were then opened, and water at the primary side in the MF/UF membrane module 7 was totally drained. Thereafter, with the air vent valve 8 and the drain valve 18 kept open, the backwash valve 12 and the raw water bypass valve 15 were opened, and the raw water pump 5 and the backwash pump 11 were operated to carry out backwash at a flux of 2 $m^3/(m^2 \cdot d)$ and feed raw water to the upper part of the membrane module at a flow rate of 20 L/min for 30 seconds. Thereafter, the backwash valve 12, raw water bypass valve 15 and the drain valve 18 were closed, the raw water pump 5 and the backwash pump 11 were stopped and the raw water valve 6 was opened at the same time, and the raw water pump 5 and the oxidant pump 13 were operated to fill the primary side in the MF/UF membrane module 7 with raw water containing no powdered activated carbon and having a chlorine concentration of 10 mg/l. After filling the primary side in the MF/UF membrane module 7 with raw water, the raw water valve 6 was closed, the raw water pump 5 and the oxidant pump 13 were stopped and the air washing valve 17 was opened at the same time, and the air blower 16 was operated to carry out air scrubbing at an air flow rate of 100 L/min for 15 seconds. Thereafter, the air washing valve 17 was closed, the air blower 16 was stopped and the drain valve 18 was opened at the same time, and water at the primary side in the MF/UF membrane module 7 was totally drained.

Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 was 45 kPa after a year with respect to 15 kPa just after the start of operation, so that stable operations were performed. As a result of carrying out chemical washing with hypochlorous acid and citric acid after an operating period of one year, the pure water permeability of the MF/UF membrane module 7 was recovered to a ratio of 94% to the new-brand article. The MF/UF membrane module 7 was disassembled to find that only 1 kg of dry sludge was accumulated in the membrane module, and the membrane outer surface was observed by an electron microscope to find that 90 percents of the membrane outer surface were flat and there was little abraded state.

(Example 4)

In an apparatus using one PVDF hollow fiber UF membrane outside-to-inside pressured type module HFU-2020 (manufactured by Toray Industries, Inc) as shown in Figure 1, the raw water valve 6 and the filtrate valve 9 were opened, the slurry pump 2 and the raw water pump 5 were operated, and river water adjusted to have a powdered activated carbon concentration of 50 mg/l in the raw water tank 4 was subjected to constant flow filtration at a membrane filtration flux of 1.5 $m^3/(m^2 \cdot d)$. The raw water valve 6 and the filtrate valve 9 were closed 30 minutes after the start of constant flow filtration, the slurry pump 2 and the raw water pump 5 were stopped, the air vent valve 8 and the drain valve 18 were then opened, and water at the primary side in the MF/UF membrane module 7 was totally drained. Thereafter, with the air vent valve 8 and the drain valve 18 kept open, the backwash valve 12 was opened and the backwash pump 11 was operated to carry out backwash at a flux of 2 $m^3/(m^2 \cdot d)$ for 30 seconds. Thereafter, the drain valve 18 was closed and the air washing valve 17 was opened at the same time, and the oxidant pump 13 and the air blower 16 were operated to carry out backwash at a chlorine concentration of 10 mg/l and air scrubbing at an air flow rate of 100 L/min for 15 seconds at the same time. Thereafter, the backwash valve 12 and the air washing valve 17 were closed, the backwash pump 11, the oxidant pump 13 and the air blower 16 were stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 was 77 kPa after a year with respect to 15 kPa just after the start of operation, so that stable operations were performed. As a result of carrying out chemical washing with hypochlorous acid and citric acid after an operating period of one year, the pure water permeability of the MF/UF membrane module 7 was recovered to a ratio of 86% to the new-brand article. The MF/UF membrane module 7 was disassembled to find that only 1.5 kg of dry sludge were accumulated in the membrane module, and the membrane outer surface was observed by an electron microscope to find that 90 percents of the membrane outer surface were flat and there was little abraded state.

(Example 5)

In an apparatus using one PVDF hollow fiber UF membrane outside-to-inside pressured type module HFU-2020 (manufactured by Toray Industries, Inc) as shown in Figure 1, the raw water valve 6 and the filtrate valve 9 were opened, the slurry pump 2 and the raw water pump 5 were operated, and river water adjusted to have a powdered activated carbon concentration of 50 mg/l in the raw water tank 4 was subjected to constant flow filtration at a filtration flux of 1. 5 m$^3$/(m$^2$·d). The raw water valve 6 and the filtrate valve 9 were closed 30 minutes after the start of constant flow filtration, the slurry pump 2 and the raw water pump 5 were stopped, the air vent valve 8 and the drain valve 18 were then opened, and water at the primary side in the MF/UF membrane module 7 was drained until the water level at the primary side in the MF/UF membrane module 7 was equal to 1/3 of the length of the separation membrane. Thereafter, with the air vent valve 8 and the drain valve 18 kept open, the backwash valve 12 was opened and the backwash pump 11 was operated to carry out backwash at a flux of 2 m$^3$/(m$^2$·d) for 30 seconds. Thereafter, the backwash valve 12 and the drain valve 18 were closed, the backwash pump 11 was stopped and the raw water valve 6 was opened at the same time, and the raw water pump 5 and the oxidant pump 13 were operated to fill the primary side in the MF/UF membrane module 7 with raw water containing no powdered activated carbon and having a chlorine concentration of 10 mg/l. After filling the primary side in the MF/UF membrane module 7 with raw water, the raw water valve 6 was closed, the raw water pump 5 and the oxidant pump 13 were stopped and the air washing valve 17 was opened at the same time, and the air blower 16 was operated to carry out air scrubbing at an air flow rate of 100 L/min for 15 seconds. Thereafter, the air washing valve 17 was closed, the air blower 16 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 was 115 kPa after a year with respect to 15 kPa just after the start of operation, so that stable operations were performed. As a result of carrying out chemical washing with hypochlorous acid and citric acid after an operating period of one year, the pure water permeability of the MF/UF membrane module 7 was recovered to a ratio of 79% to the new-brand article. The MF/UF membrane module 7 was disassembled to find that only 3 kg of dry sludge were accumulated in the membrane module, and the membrane outer surface was observed by an electron microscope to find that 80 percents of the membrane outer surface were flat and some of membrane pores were clogged by abrasion.


(Example 6)

In an apparatus using one PVDF hollow fiber UF membrane outside-to-inside pressured type module HFU-2020 (manufactured by Toray Industries, Inc) as shown in Figure 1, the raw water valve 6 and the filtrate valve 9 were opened, the slurry pump 2 and the raw water pump 5 were operated, and river water adjusted to have a powdered activated carbon concentration of 50 mg/l in the raw water tank 4 was subjected to constant flow filtration at a filtration flux of 1.5 m$^3$/(m$^2$·d). The raw water valve 6 and the filtrate valve 9 were closed 30 minutes after the start of constant flow filtration, the slurry pump 2 and the raw water pump 5 were stopped, the air vent valve 8 and the drain valve 18 were then opened, and water at the primary side in the MF/UF membrane module 7 was drained until the water level in the MF/UF membrane module 7 was equal to 1/2 of the length of the separation membrane. Thereafter, with the air vent valve 8 and the drain valve 18 kept open, the backwash valve 12 was opened and the backwash pump 11 was operated to carry out backwash at a flux of 2 m$^3$/(m$^2$·d) for 30 seconds. Thereafter, the backwash valve 12 and the drain valve 18 were closed, the backwash pump 11 was stopped and the raw water valve 6 was opened at the same time, and the raw water pump 5 and the oxidant pump 13 were operated to fill the primary side in the MF/UF membrane module 7 with raw water containing no powdered activated carbon and having a chlorine concentration of 10 mg/l. After filling the primary side in the MF/UF membrane module 7 with raw water, the raw water valve 6 was closed, the raw water pump 5 and the oxidant pump 13 were stopped and the air washing valve 17 was opened at the same time, and the air blower 16 was operated to carry out air scrubbing at an air flow rate of 100 L/min for 15 seconds. Thereafter, the air washing valve 17 was closed, the air blower 16 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 rapidly increased to 120 kPa after 8 months with respect to 15 kPa just after the start of operation, and '1.5 times of chemical washing with hypochlorous acid and citric acid were required over an operating period of one year. As a result of carrying out chemical washing with hypochlorous acid and citric acid after an operating period of one year, the pure water permeability of the MF/UF membrane module 7 was recovered to a ratio of 68% to the new-brand article. The MF/UF membrane module 7 was disassembled to find that 5 kg of dry sludge were accumulated in the membrane module, and the membrane outer surface was observed by an electron microscope to find that 60 percents of the membrane outer surface were flat and some of membrane pores were clogged by abrasion.

(Comparative Example 1)

After completion of filtration with the apparatus and conditions same as those in Examples 1 to 6, the air vent valve 8 and the backwash valve 12 were opened with the drain valve 18 kept open, and the backwash pump 11 was operated to carry out backwash at a flux of 2 $m^3/(m^2 \cdot d)$ for 30 seconds. At this time, the water level at the primary side in the MF/UF membrane module 7 was equal to or greater than 1/2 of the length of the separation membrane. Thereafter, the backwash valve 12 was closed, the backwash pump 11 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 rapidly increased to 120 kPa after 2 days with respect to 15 kPa just after the start of operation, and 180 times of chemical washing with hypochlorous acid and citric acid were required over an operating period of one year. As a result of carrying out chemical washing with hypochlorous acid and citric acid after an operating period of one year, the pure water permeability of the MF/UF membrane module 7 was recovered to a ratio of 90% to the new-brand article. The MF/UF membrane module 7 was disassembled to find that 10 kg of dry sludge were accumulated in the membrane module, and the membrane outer surface was observed by an electron microscope to find that 90 percents of the membrane outer surface were flat and there was little abraded state.

(Comparative Example 2)

After completion of filtration with the apparatus and conditions same as those in Examples 1 to 6, the air vent valve 8 and the backwash valve 12 were opened with the drain valve 18 kept closed, and the backwash pump 11 was operated to carry out backwash at a flux of 2 $m^3/(m^2 \cdot d)$ for 30 seconds. Thereafter, the backwash valve 12 was closed, the backwash pump 11 was stopped and the drain valve 18 was opened at the same time, and water at the primary side in the MF/UF membrane module 7 was totally drained. Thereafter, the raw water valve 6 was opened, the raw water pump 5 and the oxidant pump 13 were operated to fill the primary side in the MF/UF membrane module 7 with raw water containing no powdered activated carbon and having a chlorine concentration of 10 mg/l. After filling the primary side in the MF/UF membrane module 7 with raw water, the raw water valve 6 was closed, the raw water pump 5 and the oxidant pump 13 were stopped and the air washing valve 17 was opened at the same time, and the air blower 16 was operated to carry out air scrubbing at an air flow rate of 100 L/min for 60 seconds. Thereafter, the air washing valve 17 was closed, the air blower 16 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 rapidly increased to 120 kPa after 2 months with respect to 15 kPa just after the start of operation, and 6 times of chemical washing with hypochlorous acid and citric acid were required over an operating period of one year. As a result of carrying out chemical washing with hypochlorous acid and citric acid after an operating period of one year, the pure water permeability of the MF/UF membrane module 7 was recovered to only a ratio of 37% to the new-brand article. The MF/UF membrane module 7 was disassembled to find that 12 kg of dry sludge were accumulated in the membrane module, and the membrane outer surface was observed by an electron microscope to find that only 20 percents of the membrane outer surface were flat and many of membrane pores were clogged by abrasion.

(Comparative Example 3)

After completion of filtration with the apparatus and conditions same as those in Examples 1 to 6, the air vent valve 8, the backwash valve 12 and the air washing valve 17 were opened with the drain valve 18 kept closed, and the oxidant pump 13 and the air blower 16 were operated to carry out backwash at a chlorine concentration of 10 mg/l and a flux of 2 $m^3/(m^2 \cdot d)$ and air scrubbing at an air flow rate of 100 L/min at the same time for 60 seconds. Thereafter, the backwash valve 12 and the air washing valve 17 were closed, the backwash pump 11, the oxidant pump 13 and the air blower 16 were stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 rapidly increased to 120 kPa after 6 months with respect to 15 kPa just after the start of operation, and 2 times of chemical washing with hypochlorous acid and citric acid were required over an operating period of one year. As a result of carrying out chemical washing with hypochlorous acid and citric acid after an operating period of one year, the pure water permeability of the MF/UF membrane module 7 was recovered to only a ratio of 21% to the new-brand article. The MF/UF membrane module 7 was disassembled to find that 6 kg of dry sludge were accumulated in the membrane module, and the membrane outer surface was observed by an electron microscope to find that only 10 percents of the membrane outer surface were flat and many of membrane pores were clogged by abrasion.

(Comparative Example 4)

After completion of filtration with the apparatus and conditions same as those in Examples 1 to 6, the air vent valve 8 and the backwash valve 12 were opened with the drain valve 18 kept open, and the backwash pump 11 was operated to carry out backwash at a flux of 2 $m^3/(m^2 \cdot d)$ for 30 seconds. At this time, the water level in the MF/UF membrane module 7 was equal to or greater than 1/2 of the length of the separation membrane. Thereafter, the backwash valve 12 and the drain valve 18 were closed, the backwash pump 11 was stopped and the raw water valve 6 was opened at the same time, and the raw water pump 5 and the oxidant pump 13 were operated to fill the primary side in the MF/UF membrane module 7 with raw water containing no powdered activated carbon and having a chlorine concentration of 10 mg/l, the raw water valve 6 was then closed, the raw water pump 5 and the oxidant pump 13 were stopped and the air washing valve 17 was opened at the same time, and the air blower 16 was operated to carry out air scrubbing at an air flow rate of 100 L/min for 60 seconds. Thereafter, the air washing valve 17 was closed, the air blower 16 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 rapidly increased to 120 kPa after 3 months with respect to 15 kPa just after the start of operation, and 4 times of chemical washing with hypochlorous acid and citric acid were required over an operating period of one year. As a result of carrying out chemical washing with hypochlorous acid and citric acid after an operating period of one year, the pure water permeability of the MF/UF membrane module 7 was recovered to only a ratio of 31% to the new-brand article. The MF/UF membrane module 7 was disassembled to find that 8 kg of dry sludge were accumulated in the membrane module, and the membrane outer surface was observed by an electron microscope to find that only 20 percents of the membrane outer surface were flat and many of membrane pores were clogged by abrasion.

(Comparative Example 5)

After completion of filtration with the apparatus and conditions same as those in Examples 1 to 6, the raw water valve 6 and the filtrate valve 9 were closed, the slurry pump 2 and the raw water pump 5 were stopped, the air vent valve 8 and the drain valve 18 were then opened, and water at the primary side in the MF/UF membrane module 7 was totally drained. Thereafter, the drain valve 18 was closed, the backwash valve 12 was opened, and the backwash pump 11 was operated to carry out backwash at a flux of 2 $m^3/(m^2 \cdot d)$ for 30 seconds. Thereafter, the backwash valve 12 was closed, the backwash pump 11 was stopped and the drain valve 18 was opened at the same time, and water at the primary side in the MF/UF membrane module 7 was totally drained. Thereafter, the raw water valve 6 was opened, and the raw water pump 5 and the oxidant pump 13 were operated to fill the primary side in the MF/UF membrane module 7 with raw water containing no powdered activated carbon and having a chlorine concentration of 10 mg/l. After filling the primary side in the MF/UF membrane module 7 with raw water, the raw water valve 6 was closed, the raw water pump 5 and the oxidant pump 13 were stopped and the air washing valve 17 was opened at the same time, and the air blower 16 was operated to carry out air scrubbing at an air flow rate of 100 L/min for 60 seconds. Thereafter, the air washing valve 17 was closed, the air blower 16 was stopped and the drain valve 18 was opened at the same time, and water at the primary side in the MF/UF membrane module 7 was totally drained. Thereafter, the drain valve 18 was closed and the raw water valve 6 was opened at the same time, and the slurry pump 2 and the raw water pump 5 were operated to fill the primary side in the MF/UF membrane module 7 with raw water, followed by opening the filtrate valve 9, closing the air vent valve 8 and returning to the filtration step to repeat the steps described above.

Consequently, the transmembrane pressure of the MF/UF membrane module 7 rapidly increased to 120 kPa after 4 months with respect to 15 kPa just after the start of operation, and 3 times of chemical washing with hypochlorous acid and citric acid were required over an operating period of one year. As a result of carrying out chemical washing with hypochlorous acid and citric acid after an operating period of one year, the pure water permeability of the MF/UF membrane module 7 was recovered to only a ratio of 33% to the new-brand article. The MF/UF membrane module 7 was disassembled to find that 7 kg of dry sludge were accumulated in the membrane module, and the membrane outer surface was observed by an electron microscope to find that only 20 percents of the membrane outer surface were flat and many of membrane pores were clogged by abrasion.

The conditions and evaluation results of Examples and Comparative Examples are shown in Tables 1 and 2.

[Table 1]

| | Step 1 | Step 2 | Step 3 | Step 4 | Step 5 | Step 6 | Step 7 |
|---|---|---|---|---|---|---|---|
| Example 1 | Filtration | Total drainage | Backwash + drainage | Chlorine raw water feeding | Air scrubbing | Total drainage | Raw water feeding |
| Example 2 | Filtration | Total drainage | Backwash + drainage | Chlorine raw water feeding + air scrubbing | | Total drainage | Raw water feeding |
| Example 3 | Filtration | Total drainage | Backwash + drainage + raw water upper part feeding | Chlorine raw water feeding | Air scrubbing | Total drainage | Raw water feeding |
| Example 4 | Filtration | Total drainage | Backwash + drainage | Chlorine backwash + air scrubbing | | Total drainage | Raw water feeding |
| Example 5 | Filtration | 2/3 drainage | Backwash + drainage | Chlorine raw water feeding | Air scrubbing | Total drainage | Raw water feeding |
| Example 6 | Filtration | 1/2 drainage | Backwash + drainage | Chlorine raw water feeding | Air scrubbing | Total drainage | Raw water feeding |
| Comparative Example 1 | Filtration | | Backwash + drainage (water level 1/2 or higher) | | | Total drainage | Raw water feeding |
| Comparative Example 2 | Filtration | Backwash | Total drainage | Chlorine raw water feeding | Air scrubbing | Total drainage | Raw water feeding |
| Comparative Example 3 | Filtration | | Backwash + air scrubbing | | | Total drainage | Raw water feeding |
| Comparative Example 4 | Filtration | | Backwash + drainage (water level 1/2 or higher) | Chlorine raw water feeding | Air scrubbing | Total drainage | Raw water feeding |
| Comparative Example 5 | Filtration | Total drainage | Backwash | Total drainage | Chlorine raw water feeding + air scrubbing | Total drainage | Raw water feeding |

[Table 2]

|  | Just after start of operation | Differential pressure after one year | Chemical washing recovery rate | Sludge accumulation |
|---|---|---|---|---|
| Example 1 | 15 kPa | 83 kPa | 85% | 2 kg |
| Example 2 | 15 kPa | 79 kPa | 87% | 1.5 kg |
| Example 3 | 15 kPa | 45 kPa | 94% | 1 kg |
| Example 4 | 15 kPa | 77 kPa | 86% | 1.5 kg |
| Example 5 | 15 kPa | 115 kPa | 79% | 3 kg |
| Example 6 | 15 kPa | 120 kPa (after 8 months) | 68% | 5 kg |
| Comparative Example 1 | 15 kPa | 120 kPa (after 2 days) | 90% | 10 kg |
| Comparative Example 2 | 15 kPa | 120 kPa (after 2 months) | 37% | 12 kg |
| Comparative Example 3 | 15 kPa | 120 kPa (after 6 months) | 21% | 6 kg |
| Comparative Example 4 | 15 kPa | 120 kPa (after 3 months) | 31% | 8 kg |
| Comparative Example 5 | 15 kPa | 120 kPa (after 4 months) | 33% | 7 kg |

Reference Signs List

1: Activated carbon slurry tank
2: Slurry pump
3: Stirring machine
4: Raw water tank
5: Raw water pump
6: Raw water valve
7: MF/UF membrane module
8: Air vent valve
9: Filtrate valve
10: Filtrate tank
11: Backwash pump
12: Backwash valve
13: Oxidant pump
14: Oxidant tank
15: Raw water bypass valve
16: Air blower
17: Air washing valve
18: Drain valve

**Claims**

1. A method for washing a separation membrane module after filtering raw water containing particles having a hardness higher than that of a separation membrane using the separation membrane, wherein after completion of filtration, water at the primary side in a separation membrane module is drained to outside the system, backwash waste water in the separation membrane module is then drained while carrying out backwash, and any of the steps of:

> (a) filling the primary side in the separation membrane module with water and carrying out air scrubbing; and
> (b) carrying out air scrubbing while feeding water to the primary side in the separation membrane module is then carried out, followed by draining water at the primary side in the separation membrane module to outside the system.

2. The method for washing a separation membrane module according to claim 1, wherein the primary side is filled with backwash water and/or raw water and air scrubbing is carried out in the step (a).

3. The method for washing a separation membrane module according to claim 1, wherein air scrubbing is carried out while feeding backwash water and/or raw water to the primary side in the step (b).

4. The method for washing a separation membrane module according to any of claims 1 to 3, wherein after completion of filtration, water at the primary side in the separation membrane module is drained to outside the system until the water level at the primary side in the separation membrane module is at least equal to or lower than 1/3 of the length of the separation membrane.

5. The method for washing a separation membrane module according to any of claims 1 to 3, wherein after completion of filtration, water at the primary side in the separation membrane module is totally drained to outside the system.

6. The method for washing a separation membrane module according to any of claims 1 to 5, wherein the backwash flow rate is controlled so that the water level at the primary side in the separation membrane module is kept at least equal to or lower than 1/3 of the length of the separation membrane when backwash waste water in the separation membrane module is drained while carrying out backwash.

7. The method for washing a separation membrane module according to any of claims 1 to 6, wherein water is fed to the primary side in the separation membrane module from the upper part of the separation membrane module concurrently with backwash and/or after backwash.

8. The method for washing a separation membrane module according to any of claims 1 to 7, wherein an oxidant is added to water used in the step (a) or (b).

9. A method for generating fresh water in which raw water containing high hardness particles is filtered by a separation membrane module provided with a separation membrane to obtain filtrate water, wherein a filtration step is once terminated based on at least any of values of a filtration time [min], a filtrate water volume [$m^3$], a filtrate flow rate [$m^3$/hr] and a transmembrane pressure [kPa], and the separation membrane module is washed by the method according to any of claims 1 to 8, followed by resuming the filtration step.

10. The method for generating fresh water according to claim 9, wherein a coagulant is added to raw water containing particles having a hardness higher than that of the separation membrane.

11. The method for generating fresh water according to claim 9 or 10, wherein the particles having a hardness higher than that of the separation membrane are powdered activated carbon.

【Fig. 1】

<div align="center">

**INTERNATIONAL SEARCH REPORT**

</div>

| | International application No. |
|---|---|
| | PCT/JP2011/055643 |

**A. CLASSIFICATION OF SUBJECT MATTER**
*B01D65/02*(2006.01)i, *C02F1/28*(2006.01)i, *C02F1/44*(2006.01)i, *C02F1/52*
(2006.01)i

According to International Patent Classification (IPC) or to both national classification and IPC

**B. FIELDS SEARCHED**

Minimum documentation searched (classification system followed by classification symbols)
B01D65/02, C02F1/28, C02F1/44, C02F1/52

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-274021 A (Kuraray Co., Ltd.), 26 November 2009 (26.11.2009), claims 1 to 3; paragraph [0026]; example 1; comparative example 2 (Family: none) | 1-11 |
| A | JP 2001-137849 A (Hitachi Plant Engineering & Construction Co., Ltd.), 22 May 2001 (22.05.2001), paragraphs [0015], [0031] to [0033]; fig. 5 (Family: none) | 1-11 |
| A | JP 2000-254459 A (Sumitomo Heavy Industries, Ltd.), 19 September 2000 (19.09.2000), paragraphs [0017], [0019]; example 1 & EP 1034835 A1 | 1-11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 June, 2011 (07.06.11) | 14 June, 2011 (14.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| INTERNATIONAL SEARCH REPORT | International application No. |
|---|---|
| | PCT/JP2011/055643 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-140585 A  (Toray Industries, Inc.), 23 May 2000 (23.05.2000), claim 1; paragraphs [0014], [0019], [0025], [0039] (Family: none) | 1-11 |
| A | JP 2007-301469 A  (Fuji Electric Holdings Co., Ltd.), 22 November 2007 (22.11.2007), claims 3, 4; paragraph [0029] (Family: none) | 1-11 |
| A | JP 2004-344851 A  (Toyobo Co., Ltd.), 09 December 2004 (09.12.2004), example 1 (Family: none) | 1-11 |
| A | JP 2005-34694 A  (Toray Industries, Inc.), 10 February 2005 (10.02.2005), claims 1, 3; fig. 1 (Family: none) | 1-11 |

Form PCT/ISA/210 (continuation of second sheet) (July 2009)

**EP 2 554 245 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10309567 A
- JP 11342320 A
- JP 2000140585 A
- JP 2007289940 A
- JP 2001187324 A
- JP 2001079366 A
- JP 6170364 A